# EUROPEAN PATENT APPLICATION

(11) **EP 1 136 577 A1**
(43) Date of publication of application: **26.09.2001**
(21) Application number: 01106682.6
(22) Date of filing: 16.03.2001
(51) Int. Cl.: C22C 1/02, F27B 5/04

(54) **Metal alloy for white gold, and relevant method**

(30) Priority: 20.03.2000 IT MI000577
(71) Applicant: Melt Italiana S.A.S., 20090 Fizzonasco di Pieve Emanuele (IT)
(72) Inventor: Albertelli, Paolo, 27010 Siziano (PV) (IT)
(74) Representative: Coloberti, Luigi

(57) **Abstract**

A metal alloy for the production of white gold; the alloy comprises manganese or a manganese compound as a whitening agent, having high metallurgical affinity with gold. Preferably, the manganese content of the alloy ranges from 5% to 50% to give the gold the desired colour and workability. A metal charge (21) comprising manganese, is melted into the pot (13) of a furnace (10) and discharged into a cooling bath (11), in the absence of oxygen, by maintaining the environment saturated with inert gas.

## Description

### FIELD OF THE INVENTION

This invention refers to new metal alloys for white gold, and a metallurgical method for their production.

In the production of white gold, widespread use has been made of nickel alloys, in that they possess a strong whitening power and are easy to work due to the great affinity between nickel and gold.

Studies and tests have however demonstrated that the release of nickel by white gold, when worn in direct contact with the skin, may prove to be harmful when the release exceeds certain limits considered as dangerous; consequently, the regulations currently in force concerning the release of nickel by white gold, in fact, limit the use exclusively to gold articles which are not worn in direct contact with the skin.

This limitation has led alloy manufacturers to seek other whitening materials capable of offering a valid alternative to the use of nickel.

Studies conducted in 1992 and earlier, published in the Gold Bulletin 1994, proposed the use of uncustomary metals for the goldsmithery sector, such as cobalt and iron, as an alternative to nickel. Research on metals already used in this sector, such as silver and palladium, was also closely investigated.

The results of this research confirmed what in practical use was already well known. In particular, in substituting nickel with other metals, substantial problems were always encountered in terms of quality and poor workability of the gold, together with a colour of the white gold considerably below expectations.

Sufficient workability and a satisfactory colour of the white gold was achieved using palladium, the high cost of which however made this metal practically unfeasible for the production of white gold. In fact, the use of palladium for producing white gold was relegated to those articles which were impossible to manufacture with the usual nickel alloys.

The applicant of this patent application, constantly endeavouring to seek alternative solutions to the use of nickel or other conventional whitening materials, and in an attempt to discover new colours to propose to the goldsmithery sector, after lengthy experiments discovered that manganese, when appropriately alloyed with other metallurgically allied materials, possesses an excellent whitening power for gold, and also has the advantage of a very affordable cost, which is relatively low compared to the other metals currently employed.

Manganese has been variously used in the production of special metal alloys, with very low manganese contents, equivalent to or lower than 1÷2%, for example in the preparation of magnesium alloys due to their good thermal and mechanical resistance.

Although the metallurgical technology of manganese is somewhat difficult due to the close affinity of this metal with oxygen, to the point of making it difficult to use until now in the goldsmithery sector, various tests carried out have demonstrated that the problems of oxidation during the melting of the manganese are considerably reduced when it is alloyed with gold, if the preparation of the alloy is carried out in a particularly protected environment.

Until now, the use of commercially available melting furnaces in controlled atmosphere, has proved to be unsuitable in production of white gold alloyed with manganese.

Tests carried out have shown that simply melting a manganese-based alloy, in a controlled atmosphere, per se has not proved to be a sufficient measure, in that the alloy obtained proves in turn to be difficult to melt with gold; moreover, the final colour obtained proves to be somewhat unsuitable for manufacturing articles in white gold.

### SCOPES OF THE INVENTION

The main scope of this invention is to provide a new metal alloy having whitening power, in the production of white gold, as an alternative to nickel alloys or with other conventional whitening materials.

A further scope is to provide a metal alloy for the production of white gold, which requires easy metallurgy, while at the same time offering the possibility of considerably reducing the cost of the alloy, and obtaining economically and aesthetically appreciable results in terms of colour and workability of the white gold obtained with such alloy.

A still further scope of this invention is to provide a new method for obtaining metal alloys suitable for subsequent use in the production of white gold, and an apparatus which enables the use of melting furnaces appropriately designed, in such a way as to maintain controlled melting and cooling conditions, thereby reducing the risks of oxidation of the alloy to a minimum, both during the melting phase and cooling.

### BRIEF DESCRIPTION OF THE INVENTION

The aforementioned scopes can be achieved by means of a metal alloy for the production of white gold, including manganese, or a manganese compound, as whitening agent, having a high metallurgical affinity with gold.

According to another aspect of the invention, a method has been provided for obtaining a metal alloy suitable for the production of white gold, according to which metal components are melted in a controlled atmosphere to perform a metal alloy, comprising the steps of:
- preparing a charge of metal components comprising a quantity of manganese, in a pot of a melting furnace;
- feeding an inert gas into the melting furnace, making said inert gas to continuously flow before heating take place;
- heating the charge of alloy metal components until said charge of metal components is reduced to a molten metal alloy, while keeping the flow of inert gas in the melting furnace;
- discharging the molten metal alloy directly from the pot of the melting furnace into a cooling bath, maintaining an inert gas atmosphere into the melting furnace and into the cooling bath; and
- cooling the metal alloy to solidify, while maintaining inert gas condition in the cooling bath.

### BRIEF DESCRIPTION OF THE DRAWINGS

These and further features of the invention will be more clearly evident from the following description with reference to the accompanying drawings, in which:
Fig. 1 shows a cross-sectional view of an apparatus comprising a melting furnace suitable for melting metal alloys in the production of white gold, according to this invention;

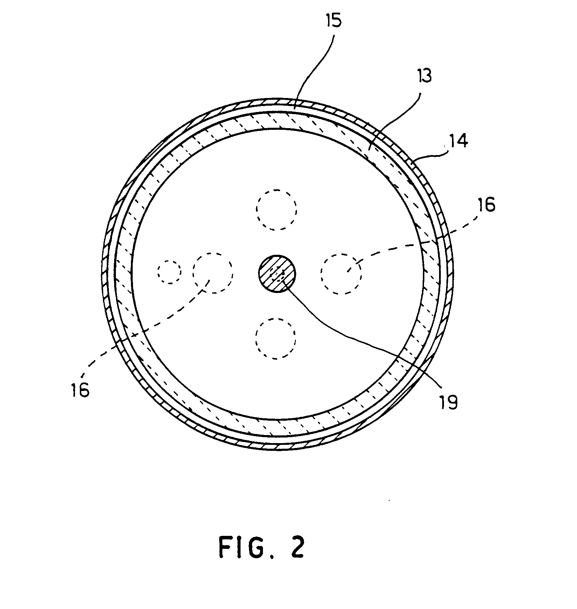

Fig. 2 shows a cross-sectional view along the line 2-2 of figure 1.

### DETAILED DESCRIPTION OF THE INVENTION

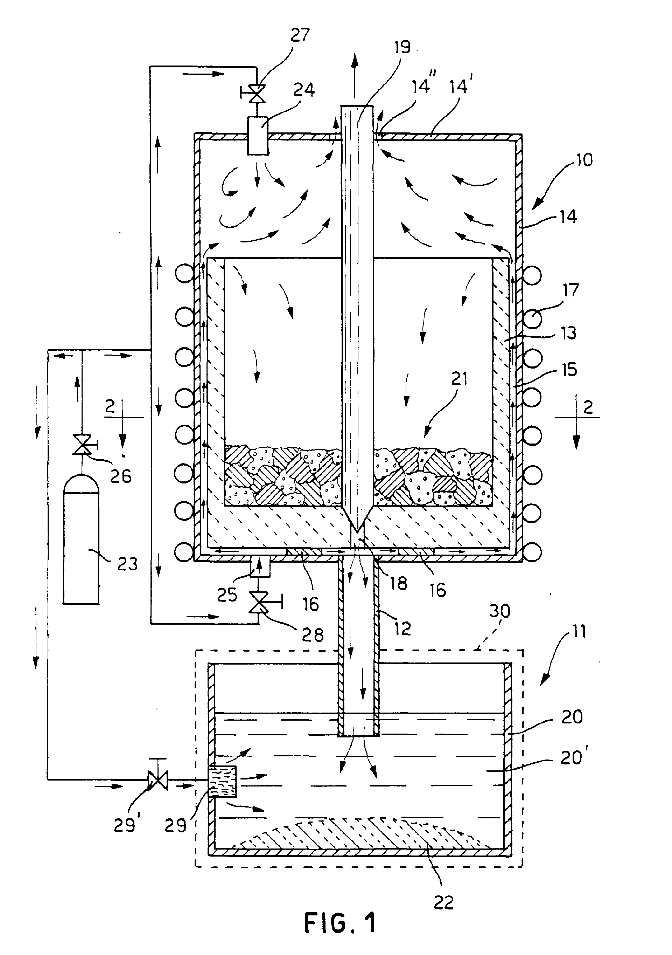

Figure 1 schematically shows in its entirety an apparatus for obtaining a manganese-based metal alloy, suitable for the production of white gold, in accordance with this invention.

The apparatus comprises a melting furnace 10 of the controlled atmosphere type, and a cooling bath 11 positioned beneath the smelting furnace 10, with which it communicates through a duct 12 for discharging the molten metal alloy.

More precisely, the melting furnace 10 comprises a melting pot 13 of refractory material, boundered by a steel jacket 14 closed by a removable lid 14', having a venting hole 14".

Between the bottom and side walls of the outer jacket 14 and of the pot 13, an air space 15 is provided for circulation of an inert gas in the smelting furnace 10, along the discharge duct 12 and in the cooling bath 11. Consequently, the air space 15 communicates upwards with the inner chamber of the furnace 10, and respectively communicates at the bottom with the duct 12 for discharging the molten metal alloy; in this connection, the bottom of the melting pot 13 is kept spaced apart from the bottom of the jacket 14, by appropriate spacers 16, as shown or in any other suitable way.

Reference 17 in figure 1 schematically indicates a source of heat, for example in the form of electric resistances or any other heating device capable of supplying the necessary quantity of heat for melting the metal components of the alloy to be produced.

The bottom of the pot 13 is provided with a tapping hole 18, normally closed with a plug member in the form of a long pointed rod 19 which may be raised from the outside of the furnace 10, and which protrudes from the venting hole 14".

The tapping hole 18 opens centrally towards the discharge duct 12, as shown.

The cooling bath 11 substantially comprises a tank 20 containing a quantity of a cooling fluid 20', for example water, or another suitable appropriately deoxygenated fluid; as shown, the level of the cooling fluid 20' must always be kept above the lower end of the discharge duct 12, so that the molten metal alloy can flow directly from the bottom of the pot 13 into the cooling fluid 20', avoiding all contact with the environmental air.

Reference 21 in figure 1 indicates the charge of the metal components including manganese, inside the melting furnace 10, before melting take place, while reference 22 schematically indicates the molten metal alloy at the bottom of the cooling bath 11.

As previously stated, manganese possesses a close affinity with oxygen, with which normally reacts to form a large quantity of oxides which would prevent the workability of the gold alloy subsequently obtained or render it difficult to use.

According to this invention, a control of the atmosphere in the furnace during the melting of the metal components into the metal alloy, both during discharge of the molten alloy and during the cooling has been proposed maintaining controlled inert conditions by circulation of an inert gas, for example nitrogen, so as to prevent any contact of the molten metals with the oxygen in the air.

Good results have been obtained by maintaining inside the furnace a continuous circulation of nitrogen at a pressure slightly higher than atmosphere. In particular, as shown in figure 1, the nitrogen contained in a bottle 23 is fed at 24 from above into the chamber of the melting furnace 10, and at the same time is fed at 25 into the bottom air space 15, so that the nitrogen gas can flows simultaneously upwards along the air space 15, into the melting pot 13, and downwards into the cooling bath 11, through the same discharge duct 12 for the molten metal alloy.

Manually operable valves 26, 27, 28 are provided to adjust the flows of gas to desired values.

Whenever the cooling fluid 20' contained in the bath 11 consists of water, at the temperature of the water supply line, it is advisable to carry out a preliminary de-aeration step to eliminate as much as possible the oxygen in the water.

This can always be achieved by feeding the inert gas used to create the protected atmosphere into the melting furnace, for example by injecting the same gas into the tank 20 by means of a stripper 29 or other suitable injection device connected to the bottle 23, by means of a manually operated valve 29'.

Whenever water is used as the cooling fluid, the tank 20 can be open towards the atmosphere; otherwise, whenever other cryogenic fluids are used, for example liquefied gas, the tank 20 can be contained in a closed environment 30, for example a suitably heat insulated container.

A possible method for producing a manganese-based alloy, which in turn can be used in the production of white gold, according to this invention, is described below.

The pot 13 of the melting furnace 10, is initially filled with a measured charge 21 of metal components to produce the desired manganese-based alloy.

When the material has been loaded into the pot, after closing the furnace 10, the nitrogen, or more in general an inert gas is made to flow, both from the bottom 25 of the air space 15, and the top 24 of the melting chamber, so as to create the desired inert environment. In fact, the nitrogen fed under a light pressure flows rapidly along the air space 15, the inside of the melting chamber, and is discharged outside through the venting aperture 14" in the lid 14', after having completely saturated the environment, entraining all the air present in the furnace.

Simultaneously, the nitrogen flows towards the discharge duct 12, and is fed into the fluid 20' of the cooling bath, together with the nitrogen injected by the stripper 29.

In this way, both inside the melting furnace 10, and inside the cooling bath 11, an environment devoid of oxygen is created, in that the air present in the furnace is vented or the oxygen in the bath is entrained outwards by the flow of inert gas.

Simultaneously, thermal energy is supplied to the furnace, until the charge of metals 21 is completely melted.

At this point, by lifting the rod 19 the tapping hole 18 is opened; the molten metal alloy is discharged directly into the fluid 20' of the cooling bath, along the discharge duct 12 in which a protected atmosphere is maintained by continuous circulation of nitrogen.

Once the metal alloy 22 has cooled down and solidified on the bottom of the tank 20, it can be removed for subsequent utilisation in the production of white gold, in the quantities necessary to obtain the desired carat weight.

International regulations on the production of white gold impose titles or carat weights which vary from one country to another in relation to local uses; in practice they go from a low gold content, for example 8 carat gold, to a high gold content, equivalent to 22 carat gold. It is obvious therefore that for each title and for each type of manufacture, it is necessary to prepare a specific alloy.

From tests carried out it has been possible to observe that metal alloys with a low manganese content, below 5%, are not suitable to provide gold in acceptable colour; conversely, percentages of manganese higher than 50% of the alloy make the gold difficult to work.

Since manganese cannot be utilised on its own, sometimes it also became necessary to select metal components most suitable to alloy manganese for producing alloys suitable for white gold.

These metals must possess the following requisites:
- to have an easy metallurgy;
- to maintain or improve the whitening power of the manganese;
- to have a cost which is as limited as possible;
- to have a good metallurgical affinity with gold; and
- to have a good metallurgical affinity with the manganese itself.

Some of the metals tested, proved to possess these requisites; good results were obtained using for example silver, copper, indium, silicon and/or zinc in different variable percentages, in relation to the title of the gold to be obtained.

Since the characteristics of alloys are highly variable, depending upon specific uses, in producing alloys for white gold it is necessary from time to time, by carrying out appropriate tests and experiments, to choose the components to be alloyed with manganese, not only as regards percentages, but often as regards the choice of the components themselves, both in relation to the title of the gold alloy to be produced, and to the specific production for which the white gold alloy is to be used.

Good results in terms of colour and of workability in rolling, have been achieved with relatively high manganese values, equivalent to or higher than 20%, for example using a Cu 50, Mn 30, Zn 20 alloy suitable for 18 carat gold.

It has also been noted that not too high percentages of silver, for example ranging from 10% to 15%, in addition to the manganese/copper/zinc ternary alloy, gives greater flowability for precision casting; for example goods results have been obtained with the following alloy: Ag 13, Cu 50, Mn 27, Zn 10 for 14 carat gold.

By maintaining the use of manganese as an active component for obtaining a whitening effect in the gold, the choice of the other metals for the alloy and their percentage may therefore vary from time to time in relation to the title and to the type of working for the gold to be produced.

From what has been described and shown in the accompanying drawings, it is now evident that the invention is aimed at providing a new and different use of manganese as a whitening agent in the production of metal alloys for white gold, as well as providing a new metallurgical technology which has proved to be suitable for producing sufficient quantities of alloys to obtain an industrial production; the invention is also aimed at providing a melting apparatus, which in particular uses a controlled atmosphere smelting furnace, combined with a suitable cooling bath.

It is understood however that what has been described and shown with reference to the accompanying drawings, has been given purely by way of example in order to illustrate the invention, and that other modifications or variations may be made both to the technological method, and to the melting apparatus, as well as to the composition of the metal alloy to be obtained, by maintaining the use of measured quantities of manganese, in combination with other metallurgically allied metals, in place of conventional metal alloys, to obtain white gold in the desired quantities and titles.

## Claims

1. Metal alloy for the production of white gold, comprising at least one whitening metal component having metallurgical affinity with gold, **characterised in that** said whitening metal component comprises manganese.

2. Metal alloy as claimed in claim 1, **characterised in that** said whitening metal component is manganese.

3. Metal alloy as claimed in claim 1 or 2, **characterised in that** the quantity of manganese in the alloy, ranges from 5% to 50%.

4. Metal alloy as claimed in claim 1, **characterised by** comprising metal components selected from: silver, copper, indium, silicon and zinc.

5. Method for producing a manganese-based metal alloy, for white gold, according to which metal components are melted in a controlled atmosphere to perform a metal alloy (22), comprising the steps of:
- preparing a charge (21) of metal components comprising a quantity of manganese, in a pot (13) of a melting furnace (10);
- feeding an inert gas (23) into the melting furnace (10), making said inert gas to continuously flow;
- heating the charge (21) of alloy metal components until said charge (21) of metal components is reduced to a molten metal alloy, while keeping the flow of inert gas in the melting furnace (10);
- discharging the molten metal alloy directly from the pot (13) of the melting furnace into a cooling bath (11), maintaining an inert gas atmosphere into the melting furnace and into the cooling bath (11); and
- cooling the metal alloy (22) to solidify, while maintaining inert gas condition in the cooling bath (11).

6. Method as claimed in claim 5, in which said inert gas is nitrogen.

7. Method as claimed in claim 5, in which the manganese is in quantities ranging from 5% to 50% of the alloy.

8. Method as claimed in claim 5, in which the inert gas is continuously fed into the melting furnace (10), and made to flow towards the cooling bath (11) through a discharge duct (12) for the molten metal alloy, keeping said discharge duct (12) dipped into the fluid (20') of the cooling bath (11).

9. Method as claimed in claim 5, in which the cooling bath (20) comprises a cooling fluid (20'), and in which the cooling fluid (20') is de-aerated by injecting (20) an inert gas.

10. Apparatus for the production of a metal alloy for white gold, by the method of the preceding claims, comprising in combination: a melting furnace (10) having a melting pot (13), a cooling bath (11), and a discharge duct (12) for discharging the molten metal alloy from the pot (13) of the melting furnace (10) directly into a cooling fluid (20') of the cooling bath (20); and means for conjointly feeding an inert gas (23) into the melting furnace (10), the discharge duct (12) and the cooling bath (11).

11. Apparatus as claimed in claim 10, in which the melting furnace (10) comprises a melting pot (13) for melting the metal alloy, and an outer metal jacket (14), in which an air space (15) for circulation of the inert gas is provided between the melting pot (13) and the outer metal jacket (14), said air space (15) opening at the upper side towards the melting furnace (10) and at the bottom opening towards the discharge duct (12).

12. Apparatus as claimed in claims 10 and 11, **characterised by** comprising means (24, 25) for directly feeding the inert gas both into the melting furnace (10), and into the air space (15) between the melting pot (13) and the outer metal jacket (14).

13. Apparatus as claimed in any of the preceding claims, comprising further means (29) for injecting an inert gas directly into the fluid (20') of the cooling bath (11).

14. Use of manganese or manganese compounds, for producing a metal alloy suitable for white gold, in which the manganese is comprised between 5 and 50% of the alloy.

15. White gold comprising a metal alloy containing manganese as a whitening agent.
